# EUROPEAN PATENT APPLICATION

(11) **EP 0 626 519 A1**
(43) Date of publication of application: **30.11.1994**
(21) Application number: 94850089.7
(22) Date of filing: 16.05.1994
(51) Int. Cl.: F04D 29/00, F04D 27/00, F04D 27/02, F04D 29/42

(54) **Airflow measuring centrifugal fan**

(30) Priority: 17.05.1993 US 63013
(71) Applicant: BROD & McCLUNG - PACE CO., Portland, Oregon 97222 (US)
(72) Inventor: Berger, Thomas A., Portland, Oregon 97221 (US)
(74) Representative: Roth, Ernst Adolf Michael

(57) **Abstract**

A centrifugal fan (20) having an integral air flow measurement apparatus, the fan including an inlet cone (26) having a flared inlet (58) for receiving air and a flared outlet (60) for expelling air into the center of a rotating fan wheel (24). The cone (26) has a throat (72) having a minimum diameter, with apertures (76) defined within the throat (72) and in communication with a manometer (30). Apertures (78) in the face of the cone near the flared inlet (58) are connected to the manometer (30) to provide a pressure comparison between the face of the fan (20) and the narrowest portion of the throat (72). A controller monitors the pressure differential, calculates a flow rate based on known characteristics of the cone, and adjusts the fan speed to maintain the desired air flow.

## Description

### BACKGROUND OF THE INVENTION

This invention relates to ventilation systems, and particularly to those for industrial applications, including those with centrifugal fans.

Two important factors affect the design and performance of industrial ventilation systems: efficiency and precision flow measurement capability. Every system has a particular efficiency level that is a function of how readily air flows through the system. Each component of a system through which air flows presents a certain amount of resistance to air flow. This resistance is determined by the size and shape of the component, and by the nature of any obstacles or surfaces over which the air flows. Generally, components that are wider, smoother, straighter and shorter have less resistance to air flow, and therefore provide a more efficient system. Improved efficiency permits the use of a lower capacity fan to generate air flow in the system, and requires less energy to maintain a given flow. Consequently, improved efficiency can reduce equipment and operating costs.

In many ventilation systems, it is advantageous to precisely measure the rate of air flow through the system. This ensures compliance with various codes and functional specifications, and is particularly important in specialized applications such as clean room ventilation systems. Systems without precise flow measuring capability must be overdesigned with excess capacity, and operated at excess levels to ensure compliance with operating specifications. In addition, filters used in some systems become more resistant to air flow as they become clogged with particles over time. Thus, fan speed must be increased to maintain the specified air flow. This capability requires precise measurements to indicate what adjustments are needed.

It is possible to characterize the air flow performance qualities of individual system components such as fans. Such a characterization would provide a set of curves, each indicating the rate of air flow through the fan as a function of the load or air flow resistance upon which the fan is acting, given a particular rate of fan rotation. As the fan rotation rate is changed, a different characterization curve must be applied to determine the rate of air flow through the fan. Alternatively, the curve may represent flow rate as a function of rotation under a constant load. While such laboratory characterization may be feasible for certain individual off-the-shelf components such as fans, it is impractical to characterize entire ventilation systems, which differ widely from one application to the next.

Existing air flow measurement systems have had to weigh the trade-offs between efficiency and precision of measurement. Each of the prior art measurement systems creates an obstruction or constriction within the air flow, and measures the effect of the obstruction or constriction on the air pressure at a certain point in the system. Increasing the size of the obstruction or amount of the constriction provides generally more precise pressure measurements but reduces system efficiency.

A pitot tube is a basic example of an obstruction-type measurement device. It has an orifice facing directly upstream to provide a total, static, and/or velocity pressure measurement. Precision depends on the relative area of the opening that faces the air stream, by the number and position of openings within the air stream, and by the velocity of the air stream being measured. For precision, several openings of appreciable diameter should be provided within the air stream. At least some of the openings should be centrally located in the stream to reduce errors arising at the air stream boundaries. Conduits transmitting pressure from the openings to pressure transducers must be sufficiently rigid to withstand the force of air flow. All such conduits and other supports within the air stream further cause turbulence and impede the flow of air, reducing system efficiency. A pitot tube placed in a segment of the system having a large cross-sectional area and a low air flow velocity will be imprecise, but will have minimal harmful effect on system efficiency. One placed in a higher velocity region will have higher precision, but will obstruct a larger fraction of the conduit area and reduce efficiency due to the increased velocity of air flow.

A venturi tube is an example of a simple air flow measurement device that operates by constricting the air flow in the conduit. The venturi tube has a given initial diameter which narrows down to a throat of lesser diameter, causing the velocity of air passing through the throat to exceed the initial velocity. One pressure tap monitors the air pressure within the initial conduit, and a second tap monitors pressure within the throat. This pressure differential is measured to determine the air flow rate. In its simplest form, a venturi tube may take the form of an orifice plate having a limited aperture for constricting the air flow, with pressure sensors upstream and downstream from the orifice plate. This second type of air flow sensor is accurate only to the extent that it creates a significant back pressure in the air stream. As with the obstruction-type sensors, the increased flow resistance needed for precision also creates system inefficiency.

One constriction-type air flow sensor takes the form of a nozzle having a flared inlet shaped much like a trumpet bell, and which smoothly narrows to a cylindrical throat having limited diameter and terminating at an outlet. The cylindrical throat has a constant circular cross-sectional profile over an extended length. At an intermediate position along its length, the throat defines holes opening into its interior and in communication with pressure sensors. A pressure comparison with the region upstream of the nozzle permits an air flow calculation as discussed above.

### SUMMARY OF THE INVENTION

The present invention provides a centrifugal fan having an inlet cone that has a flared inlet and a flared outlet, and which includes a pressure tap or taps positioned in the throat of the cone at or near the position having the narrowest diameter. A second tap or set of taps is connected with holes in the inlet of the cone. A pressure sensor determines the pressure differential between the two sets of taps and sends a signal to a controller, which calculates the air flow rate through the inlet cone and adjusts the fan speed to maintain the air flow volume at a predetermined rate. The fan may be included in a system having duct work and elements through which the air flow passes, with the effective diameter of the narrowest portion of the inlet cone being less than that of any single one of or parallel group of the elements. Consequently, the pressure differential is greatest across the inlet cone at a given air flow rate through the system.

A main object of the present invention is to provide an air flow sensor for a system including a centrifugal fan wherein the sensor does not impair the efficiency of the system and wherein in the sensor may precisely detect small changes in the air flow volume rate.

Other objects of the invention will be apparent from the following description taken in connection with the accompanying drawings.

### BRIEF DESCRIPTION OF THE DRAWINGS

FIG. 1 is a schematic cross-sectional side view of a preferred embodiment of the invention as installed in a building ventilation system.

FIG. 2 is a detailed cross-sectional side view of the embodiment of FIG. 1.

FIG. 3 is a fragmentary cross-sectional view of a pressure tap taken along line 3-3 of FIG. 1.

FIG. 4 is an axial view of the pressure transmission conduits of the embodiment of FIG. 1.

### DETAILED DESCRIPTION OF A PREFERRED EMBODIMENT

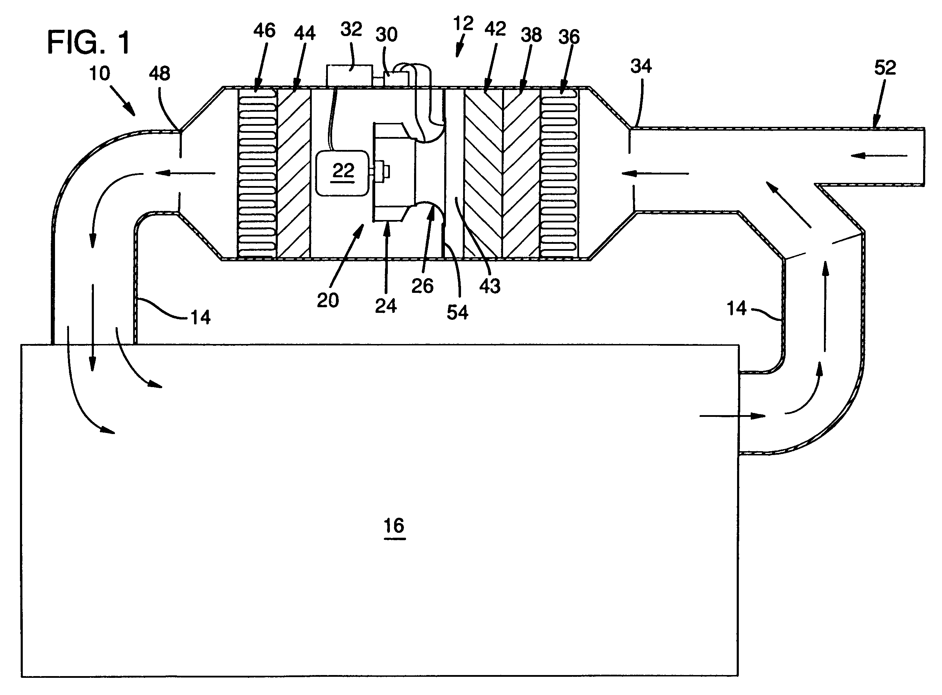

FIG. 1 shows a building ventilation system 10 having a central station air handler 12 connected by ductwork 14 to a building space 16. A centrifugal fan unit 20 is attached within the air handler 12 for circulating air through the system 10. The fan unit 20 includes a fixed electric motor 22, a rotatable centrifugal bladed fan wheel 24 mounted to the motor shaft to be driven thereby, and an inlet cone 26. A pressure sensor 30 is connected to detect and compare the pressure at the front of the inlet cone and at the narrowest point of the inlet cone. The sensor 30 transmits an electrical signal to a controller 32, which is operably connected to the motor 22 to adjust the motor speed in response to the detected pressure to maintain a preselected air pressure differential. Consequently, a preselected rate of air flow may be maintained. Alternatively, the controller may adjust an inlet damper to control the air flow volume. The controller may also adjust the drive ratio between the motor and the fan wheel. The controller need not automatically control an element of the system, but may simply comprise a display, guage, recorder, or computer data storage system to permit monitoring of the system by human operators, enabling manual system adjustments.

The central station air handler 12 may include a wide variety of air processing components used for processing air in typical applications such as building ventilation and clean room air systems. Such components are generally arranged in series so that all air passing through the handler 12 passes sequentially through each of the components. In the illustrated example, air processed through the central station air handler 12 passes sequentially through: an air handler intake 34 connected to ductwork 14; an intake filter 36; an electric heater unit 38; a cooling coil 42; a plenum 43; the inlet cone 26; the bladed wheel 24; a sound trap 44; an output filter 46; and an outlet 48. The central station air handler 12 may also include other air processing components such as humidifiers.

In the illustrated system, each component has a given resistance to air flow. Some components, such as dampers or valves (not shown) may have selectably variable levels of flow resistance. The flow resistance of certain other components varies with use. For instance, filters become more resistant to air flow as they become clogged with particulate matter, and cooling coils may present a greater resistance to air flow as water condenses on their surfaces. Each component has an inherent "design" air flow resistance under worst case conditions, and a minimum resistance under ideal conditions. Each component has an "effective diameter" equivalent to the diameter of an orifice having the same airflow resistance.

Under normal operating conditions, a pressure drop occurs across each component. This pressure drop may be measured by comparing the pressure immediately upstream and downstream of each component. The pressure drop across the inlet cone 26 in one embodiment is equivalent to about 15 inches of water under normal operating conditions. Each of the other illustrated components has a pressure drop generally less than about one inch of water. Therefore, the pressure differential across the cone is substantially greater than that across any of the other components. Furthermore, in most cases, the pressure differential across the cone is greater than the sum total of the pressure drops across all other components in the entire system. Put another way, the inlet cone generally defines the highest velocity of airflow within the system. Because high velocity flow generates a low pressure, a pressure comparison between the cone's throat and an essentially static region in the system provides a significant, precisely measured value.

The inlet cone 26 has the smallest effective diameter of any system component. A set of narrow ducts transmitting flow through parallel paths at relatively low velocity is considered to be a single system component.

Ventilation systems may be created in innumerable configurations. The building space 16 may comprise a single room, or numerous rooms in one or more buildings. The ductwork 14 may include a network of branching ducts of various diameters so that air may flow through any number of alternative paths. The illustrated system also shows a fresh air intake duct 52 and may include any number of other intake and output apertures.

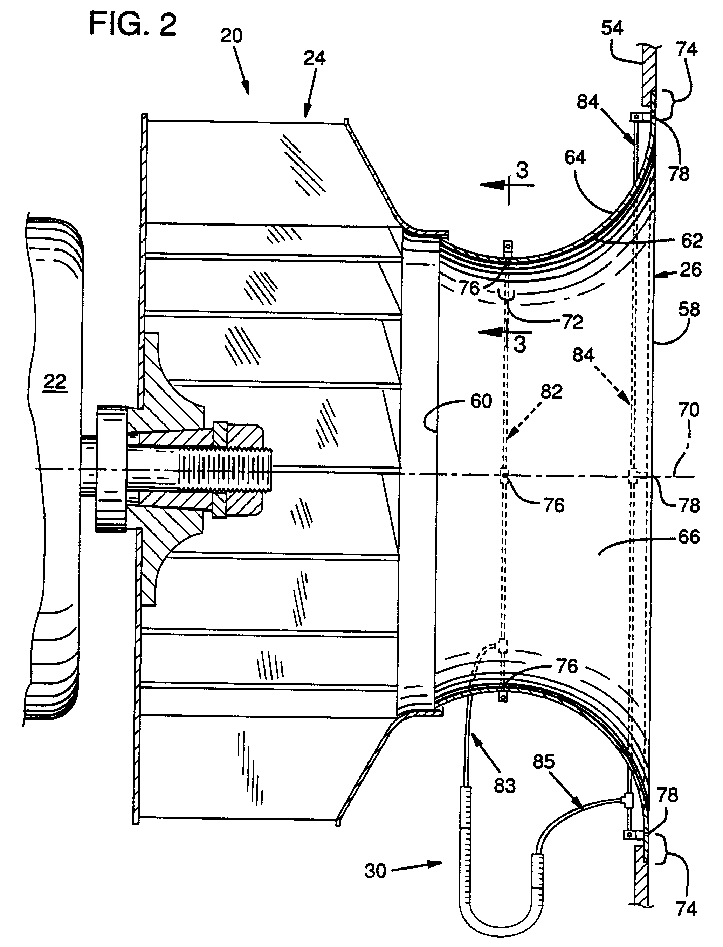

As shown in FIG. 2, the centrifugal fan unit 20 is arranged with the inlet cone 26 mounted flush with a plenum wall 54 so that all air encountering the wall must pass through the inlet cone. The cone includes a flared inlet 58 and a flared outlet 60, and has an interior surface 62 and an exterior surface 64. The interior surface 62 defines a passage 66 centered on an axis 70, which is also the axis of rotation of the bladed fan wheel 24. The interior surface 62 has a partly toroidal cross-section. Put another way, the surface 62 is defined as a surface of revolution of a circular arc segment about the axis 70. Generally speaking, the passage 66 is circular, with a diameter that is widest at the inlet 58. The effective diameter narrows to a minimum at a throat portion 72. Because the outlet 60 is flared, the diameter at the outlet is larger than the diameter at the throat 72. In a cross-sectional plane that includes the axis 70, the profile of the cone is a curve having a constant radius over a major portion of its length. Thus, the throat portion 72 is a circular band having essentially no width. In practical terms, the throat portion may have a finite width extending beyond the theoretical region of minimum diameter.

At the inlet 58 the cone includes an annular flange 74 in a plane perpendicular to the axis 70. The toroidally curved portion of the cone makes a smooth tangential transition from the flat flange 74.

The cone 26 defines four small throat apertures 76, each of which passes between the interior surface 62 and the exterior surface 64. The throat apertures 76 are evenly distributed at 90° intervals at the narrowest throat region 72 of the cone. In embodiments of large size, the cone may be formed in two pieces, with a seam at the throat. In these cases, the apertures 76 are slightly offset away from the seam to facilitate manufacturability. Four face apertures 78 are distributed in a circular array at 90° intervals where the flange 74 transitions to the curved portion of the inlet cone. The throat apertures 76 are interconnected by a first conduit 82 which is connected to the pressure sensor 30. The conduit 82 fully encircles the cone so that air may flow therethrough to equalize the pressure between any of the apertures 76. The conduit includes a shunt 83 connected to the pressure sensor 30 to provide an average pressure in the throat of the inlet cone.

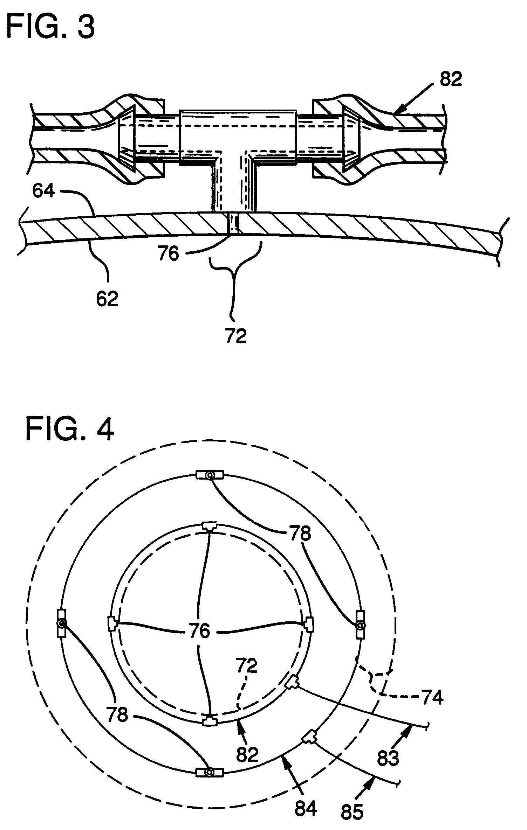

Similarly, the face apertures 78 are interconnected by a second conduit 84 which is connected by a shunt 85 to the pressure sensor 30. As shown in FIG. 2, the pressure sensor 30 is a U-tube manometer serving as a pressure comparator. The shunt 83 of the first conduit 82 is attached at one end of the manometer and the shunt 85 of the second conduit 84 attached at the other end. FIG. 4 illustrates schematically how the conduits 82, 84 are connected to the apertures as discussed above.

The face apertures 78 are included in the cone to provide air flow measurement in a single unit. However, any pressure sensor positioned in the plenum upstream of the fan will provide suitable results. Less accurate results that may be suitable for some applications may be obtained with a sensor positioned anywhere else within or outside of the system, or without any pressure sensor other than one within the cone throat.

### EXAMPLE

The fan wheel 24 and motor 22 are of a conventional nature. An example is disclosed in U.S. Patent No. 4,859,140 to Passadore which is incorporated herein by reference. The motor shaft need not be coincident with the axis 70. The motor may be positioned at a separate location, with a belt drive mechanism transmitting power to the wheel 24. Alternatively, a double-width-double-inlet fan having two bladed wheels and two inlets cones may be employed without departing from the principles of the invention. The fan wheel 24 is preferably a backwardly inclined air foil type of impeller, although other centrifugal or axial fan impellers may be employed.

In the preferred embodiment, the inlet cone may have a throat diameter within, but not necessarily limited to, a range between 7.5 and 45 inches. Cones within this range will have corresponding flange outside diameters ranging between 14.25 and 81.5 inches, axial inlet-to-outlet lengths ranging between 3.8 and 22.5 inches, and profile radii ranging between 2.5 and 15.1 inches. Intermediate sizes and those beyond these exemplary range limits have generally proportional dimensions.

In the preferred embodiment, the pressure 30 includes a U-tube manometer Series 1227, available from Dwyer of Michigan City, Indiana, and a transducer for generating a voltage proportional to the pressure within a range of 0-10 volts DC, and for delivering a current of 4-20 milliamps. The controller 32 is a Vel-trol™ model 13000AZ indicating transmitter-controller from Air Monitor of Santa Rosa, California.

Having illustrated and described the principles of my invention by what is presently a preferred embodiment, it should be apparent to those skilled in the art that the illustrated embodiment may be modified without departing from such principles. I claim as my invention not only the illustrated embodiment, but all such modifications, variations and equivalents thereof as come within the true spirit and scope of the following claims.

## Claims

1. A fan for a ventilation system comprising:
a frame;
an air-moving element, operably connected to the frame;
an inlet cone attached to the frame, the inlet cone defining a major passage through which air may pass, the passage having an inlet with a first width, a throat having a lesser second width, and an outlet flared to a third width greater than the second width, the outlet generally facing the air-moving element;
the cone defining a first aperture in communication with the passage and positioned at the throat; and
a first pressure sensor in fluid communication with the first aperture.

2. The apparatus of claim 1 including a controller operably connected to the first pressure sensor and to the air-moving element.

3. The apparatus of claim 1 wherein the cone surface defines a toroidal section.

4. The apparatus of claim 1 wherein the throat has a minimum diameter portion through which the first aperture is defined.

5. The apparatus of claim 1 wherein the cone is defined by a surface of revolution about a primary axis.

6. The apparatus of claim 5 wherein the first aperture is positioned on a first cone surface portion tangent to a line parallel to the primary axis.

7. The apparatus of claim 5 wherein cone defines a second aperture positioned on a second cone surface portion facing in a direction parallel to the primary axis.

8. The apparatus of claim 1 including multiple apertures positioned in the throat of the inlet cone.

9. The apparatus of claim 8 wherein the multiple apertures are interconnected to provide an average pressure.

10. The apparatus of claim 1 wherein the air-moving element is a centrifugal fan wheel.

11. The apparatus of claim 1 wherein the cone further defines a second aperture positioned nearer the inlet than is the first aperture.

12. The apparatus of claim 1 including a second pressure sensor positioned outside the major passage and connected to the first pressure sensor.

13. A ventilation system comprising:
a plurality of components interconnected in fluid communication with each other to define an air flow path;
each component having its own minimum resistance to air flowing therethrough;
a first one of the components comprising a fan inlet cone having a first minimum resistance to air flow greater than the minimum resistance to air flow of any other single component;
the inlet cone defining a passage through which air may pass, the cone further defining a first aperture in communication with the passage; and
a pressure sensor in communication with the first aperture.

14. The system of claim 11 wherein the cone defines a second aperture spaced apart from the first aperture, the second aperture being in communication with a second pressure sensor.

15. The system of claim 11 wherein the first and second pressure sensors together comprise a pressure comparator.
